# EUROPEAN PATENT APPLICATION

(11) **EP 3 427 940 A1**
(43) Date of publication of application: **16.01.2019**
(21) Application number: 18183546.3
(22) Date of filing: 13.07.2018
(51) Int. Cl.: B32B 5/02, B32B 5/14, B32B 5/26, B32B 7/12, B32B 27/12, B32B 27/36

(54) **COMPOSITE LAMINATED ARTICLE AND METHOD FOR MANUFACTURING THE SAME**

(30) Priority: 14.07.2017 US 201715649659
(71) Applicant: Miniwiz Co., Ltd., 106 Taipei (TW)
(72) Inventor: HUANG, Chian-Chi, 106 Taipei (TW); LIU, Tzu-Wei, 106 Taipei (TW); TARN, Yu-Hung, 106 Taipei (TW); CHANG, Yi-Chun, 106 Taipei (TW); LEGRAND, Guillemette Pauline Marion, 44600 Saint-Nazaire (FR); TEXIER, Camille Jeanne, Voisins le Bretonneux (FR); BOEDECKER, Johann Joseph Alexej, 10178 Berlin (DE)
(74) Representative: Lang, Christian

(57) **Abstract**

Disclosed herein are composite laminated articles and methods for manufacturing the same. According to some embodiments, the composite laminated article includes a polyethylene terephthalate (PET) fiber fabric layer, a PET nonwoven laminated board, and a PET film interposed between the PET fiber fabric layer and the PET nonwoven laminated board. In some embodiments, the composite laminated article further includes a low-density PET nonwoven fabric layer interposed between the PET film and the PET nonwoven laminated board. According to embodiments of the present disclosure, the composite laminated article is free of any thermoset binder, and hence, the composite laminated article is one hundred percent recyclable.

## Description

### BACKGROUND OF THE INVENTION

### 1. FIELD OF THE INVENTION

The present disclosure relates to composite laminated articles; more particularly, to composite laminated articles made from polyethylene terephthalate (PET).

### 2. DESCRIPTION OF RELATED ART

Thermoplastic materials of all types have found many uses in various daily commodities. However, the widespread use of thermoplastic materials has created a problem relating to the disposal of thermoplastic products after their useful life.

Currently, thermoplastic products are incinerated, buried in a land fill, provided with biodegrading properties, or recycled.

Across most developed nations, landfill still remains the primary means of waste disposal for thermoplastic materials. With the increasing awareness of environmental protection, many countries are attempting to minimize the amount of waste going to incinerators and landfill sites by developing recycling and reutilization programs. However, their efforts have had varying degrees of success. According to the statistical data from Organization for Economic Co-operation and Development (OECD), Germany leads the world in waste recovery with 66 percent of municipal waste is either recycled or composted in 2014, followed by South Korea (59%) and Austria (58%). In contrast, the recovery rate of municipal waste in the United States is only 34%.

There might be a number of reasons contributing to the low recycling rate in various countries; among them, the value generated from the recycled product is undoubtedly an important one. Currently, most waste plastic beverage containers (e.g., those made of PET) are recycled to make new PET beverage bottles or PET fibers. Therefore, providing high-value recycled products may improve the recycling rate.

In view of the foregoing, there exists a need in the art for providing recycled materials having widespread applications and methods for manufacturing the same.

### SUMMARY

The following presents a simplified summary of the disclosure in order to provide a basic understanding to the reader. This summary is not an extensive overview of the disclosure and it does not identify key/critical elements of the present invention or delineate the scope of the present invention. Its sole purpose is to present some concepts disclosed herein in a simplified form as a prelude to the more detailed description that is presented later.

In one aspect, the present disclosure is directed to a composite laminated article. The present composite laminated article is advantageous in that it is made entirely from polyethylene terephthalate (PET). According to various embodiments of the present disclosure, the composite laminated article itself may be made, partially or wholly, from recycled PET. Using the combination of PET materials with different properties (e.g., the melting temperature), it is feasible to obtain composite laminated articles with various patterns, touches and feels, thereby enhancing the value of the present composite laminated articles. Moreover, since the present composite laminated article itself is composed of PET, after the useful life of the composite laminated article, the whole article may be subjected to the recycling process.

According to one embodiment of the present disclosure, the composite laminated article comprises a polyethylene terephthalate (PET) fiber fabric layer, a PET nonwoven laminated board, and a PET film interposed between the PET fiber fabric layer and the PET nonwoven laminated board. In this embodiment, at least a portion of the PET film is melted during a manufacturing process; in this way, the melted PET served as a binder that holds the PET fiber fabric layer and the PET nonwoven laminated board together.

In some optional embodiments, the composite laminated article further comprises a low-density PET nonwoven fabric layer, which is interposed between the PET film and the PET nonwoven laminated board. In some other optional embodiments, the low-density PET nonwoven fabric layer is interposed between the PET fiber fabric layer and the PET film. Specifically, the low-density PET nonwoven fabric layer comprises a plurality of needle-punched PET fabrics. According to various embodiments of the present invention, the density of the low-density PET nonwoven fabric layer is less than 13 kg/m³; preferably, less than 6.5 kg/m³.

According to some optional embodiments of the present invention, the PET nonwoven laminated board has at least one of the following mechanical properties: a tensile strength of at least 32 Mpa, a yield strength of at least 15 Mpa, a flexural strength of at least 18 Mpa, and a flexural modulus of at least 640 Mpa.

According to certain embodiments of the present invention, the composite laminated article is free of any thermoset binder.

According some embodiments of the present invention, the melting temperature of the PET film is lower than the melting temperature of the PET at the surface of the PET fiber fabric layer or the melting temperature of the PET nonwoven laminated board. Also, in certain optional embodiments, the melting temperature of the PET film is lower than the melting temperature of the PET of the low-density PET nonwoven fabric layer.

The present composite laminated article may be made into various products. For example, according to some embodiments, the composite laminated article may be a chair shell.

According to some embodiments of the present disclosure, the PET fiber fabric layer, the PET film, the low-density PET nonwoven fabric layer, and the PET nonwoven laminated board are made from recycled PET.

In another aspect, the present disclosure is directed to a method for manufacturing a composite laminated article. According to the principles and spirits of the present disclosure, the composite laminated article is made entirely from polyethylene terephthalate (PET), which may be recycled PET or new PET. The present method takes advantage of the fact that the PET materials used to make the composite laminated article are of different properties (e.g., the melting temperature); therefore, by adjusting the manufacturing parameters (such as the heating temperature or the pressure applied), it is feasible to obtain composite laminated articles with various patterns, touches and feels. In this way, the value of the composite laminated articles thus-obtained is enhanced.

According to certain embodiments of the present disclosure, the method comprises the following steps: (a) pressing and heating a plurality of nonwoven PET fabrics with a shaping mold using a first pressure and a first temperature that is higher than the melting temperature of the nonwoven PET fabrics; (b) allowing the hot-pressed nonwoven PET fabrics from the step (a) to cool down, thereby obtaining a PET nonwoven laminated board with a shape corresponding to the shaping mold; (c) forming a stack comprising a polyethylene terephthalate (PET) fiber fabric layer, a PET film, and the PET nonwoven laminated board from the step (b), wherein the PET film is interposed between the PET fiber fabric layer and the PET nonwoven laminated board, wherein the melting temperature of the PET film is lower than the melting temperature of the PET at the surface of the PET fiber fabric layer and the melting temperature of the PET nonwoven laminated board; and (d) pressing and heating the stack from the step (c) with a laminating mold using a second pressure and a second temperature, wherein the second pressure is lower than the first pressure, the second temperature is higher than the melting temperature of the PET film and is lower than the melting temperature of the PET at the surface of the PET fiber fabric layer and the melting temperature of the PET nonwoven laminated board, and the laminating mold contacts at least a portion of the stack, thereby forming the composite laminated article.

In the optional embodiments where the product, i.e., the composite laminated article, comprises a low-density PET nonwoven fabric layer, the step (c) further comprises disposing the low-density PET nonwoven fabric layer between the PET film and the PET nonwoven laminated board. Alternatively, the step (c) comprises disposing the low-density PET nonwoven fabric layer between the PET fiber fabric layer and the PET film. The low-density PET nonwoven fabric layer comprises a plurality of needle-punched PET fabrics. Also, in the step (d), the second temperature is lower than the melting temperature of the PET of the low-density PET nonwoven fabric layer.

According to embodiments of the present invention, the method further comprises the following step: (e) cutting the excess fabric from the composite laminated article by laser cutting, computer numeral control (CNC) cutting, water jet cutting, or die cutting. For example, the laser cutting may be performed using a 5-axis laser cutting technique.

In various embodiments, the first temperature used in the step (a) is 180 to 250°C, and the first pressure used in the step (a) is 180 to 250 kgf/cm2. Still optionally, in the step (d), the second temperature is 150 to 200°C, and the second pressure is 120 to 180 kgf/cm2.

According to certain embodiments of the present invention, the method does not comprise the step of applying a thermoset binder.

Many of the attendant features and advantages of the present disclosure will becomes better understood with reference to the following detailed description considered in connection with the accompanying drawings.

### BRIEF DESCRIPTION OF THE DRAWINGS

The present description will be better understood from the following detailed description read in light of the accompanying drawings as briefly described below.
Figure 1 is a schematic diagram illustrating a composite laminated article according to one embodiment of the present disclosure.
Figure 2A is a schematic diagram illustrating a composite laminated article according to another embodiment of the present disclosure.
Figure 2B is a schematic diagram illustrating a composite laminated article according to yet another embodiment of the present disclosure.
Figure 3A is a schematic diagram illustrating the process for manufacturing a composite laminated chair shell according to one embodiment of the present disclosure.
Figure 3B is a schematic exploded view of the composite laminated chair shell manufactured by the process of Figure 3A.

In accordance with common practice, the various described features/elements are not drawn to scale but instead are drawn to best illustrate specific features/elements relevant to the present invention. Also, like reference numerals and designations in the various drawings are used to indicate like elements/parts.

### DESCRIPTION

The detailed description provided below in connection with the appended drawings is intended as a description of the present examples and is not intended to represent the only forms in which the present example may be constructed or utilized. The description sets forth the functions of the example and the sequence of steps for constructing and operating the example.

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard deviation found in the respective testing measurements. Also, as used herein, the term "about" generally means within 10%, 5%, 1%, or 0.5% of a given value or range. Alternatively, the term "about" means within an acceptable standard error of the mean when considered by one of ordinary skill in the art. Other than in the operating/working examples, or unless otherwise expressly specified, all of the numerical ranges, amounts, values and percentages such as those for quantities of materials, durations of times, temperatures, operating conditions, ratios of amounts, and the likes thereof disclosed herein should be understood as modified in all instances by the term "about." Accordingly, unless indicated to the contrary, the numerical parameters set forth in the present disclosure and attached claims are approximations that can vary as desired. At the very least, each numerical parameter should at least be construed in light of the number of reported significant digits and by applying ordinary rounding techniques. Ranges can be expressed herein as from one endpoint to another endpoint or between two endpoints. All ranges disclosed herein are inclusive of the endpoints, unless specified otherwise.

Unless otherwise defined herein, scientific and technical terminologies employed in the present disclosure shall have the meanings that are commonly understood and used by one of ordinary skill in the art. Moreover, unless otherwise required by context, it will be understood that singular terms shall include plural forms of the same and plural terms shall include the singular. Also, as used herein and in the claims, the terms "at least one" and "one or more" have the same meaning and include one, two, three, or more. Furthermore, the phrases "at least one of A, B, and C", "at least one of A, B, or C" and "at least one of A, B and/or C," as use throughout this specification and the appended claims, are intended to cover A alone, B alone, C alone, A and B together, B and C together, A and C together, as well as A, B, and C together.

The present disclosure provides a novel composite laminated article and method for manufacturing the same. The present composite laminated article is made from polyethylene terephthalate (PET) of different properties (e.g., the melting temperature), in which the PET materials may be made from new or recycled PET or a combination of both. Accordingly, by adjusting the manufacturing process, the final product may have desired patterns, touch and fell that best meet the consumer's need. In this way, the market value of the composite laminated articles, in particular for those made from recycled materials, is increased. On the other hand, because the present composite laminated article itself is made from PET, the composite laminated article may be easily recycled after the useful life thereof.

Furthermore, the conventional composite laminated articles made from thermoplastic materials often use thermoset resins (e.g., synthetic thermoset resins or natural thermoset rubbers) as the binder or adhesive so that the layers are laminated by the binder. However, conventional recycling process for thermoplastics cannot be used to process thermoset resins. Therefore, when disposing conventional composite articles comprising the thermoset resin, it is not feasible to subject such articles to the recycling process unless some pre-treatments are carried out to remove the thermoset resin. This causes extra costs (both monetary and time costs) to the recycling process. In contrast, according to the principles and spirits of the present disclosure, no thermoset resin is used as the binder to hold the layers together, thereby providing composite laminate articles that are ready to be recycled after their usual life span.

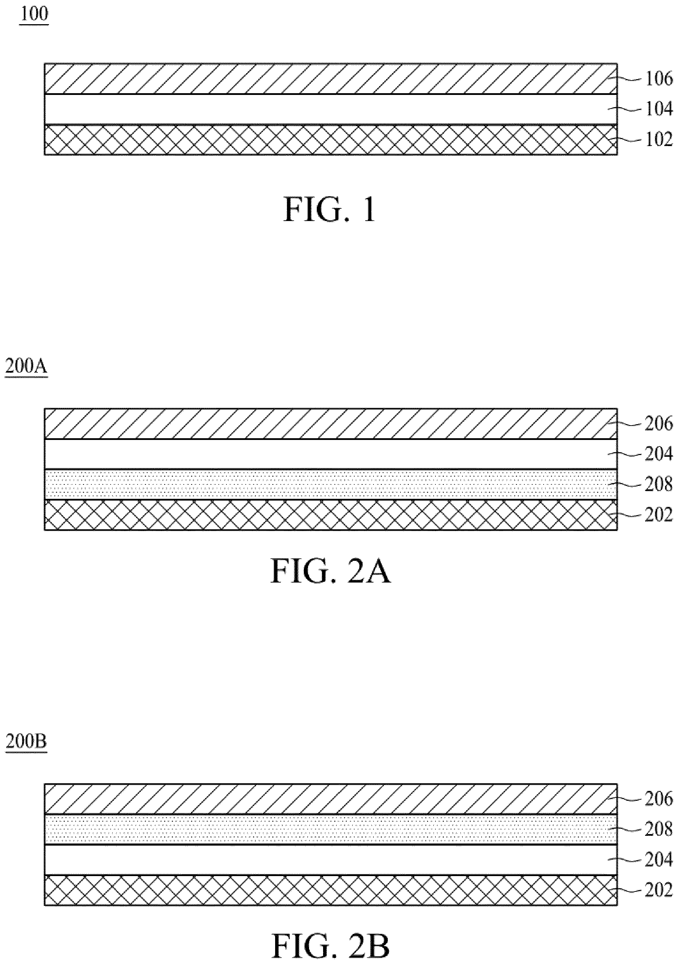

As could be appreciated, the present composite laminated article comprises multiple layers of PET materials that are laminated to form an article. Reference is made to Figure 1, which is a schematic diagram illustrating the arrangement of the PET layers of the composite laminated article 100 according to certain embodiments of the present disclosure. As illustrated in Figure 1, the composite laminated article 100 is composed of, from bottom to top, a PET nonwoven laminated board 102, a PET film 104, and a PET fiber fabric layer 106. It should be noted that the present composite laminated article is preferably made by the hot-press technique, therefore, during the manufacturing process, at least a portion of the PET film 104 is melted upon being heated to its melting point Tm, and the melted PET solidifies once it is cooled down, thereby holding the PET nonwoven laminated board 102 and the fiber fabric layer 106 together. Therefore, although the PET film 104 as illustrated in in Figure 1 as a flat, intact film, in the composite laminated article, a portion of the PET film 104 may be thinner than the other portion, or in some cases, the final PET film may have some voids due to the hot-press process. Similarly, the surface of the PET fiber fabric layer in the final composite laminated article is not flat; rather, recesses may be seen at portions that was pressed by a mold during the manufacturing process, thereby giving the final composite laminated article a unique pattern that may be appealing to the consumers.

As could be appreciated, the PET fiber fabric layer 106 is made of a plurality PET fibers. These PET fibers may be single-component fibers or multi-component PET fibers. The single-component PET fibers are made of substantially homogeneous PET masterbatches. Regarding multi-component PET fibers, common examples include core-sheath fibers and islands-in-a-sea fibers, in which one PET component may have a property (e.g., melting temperature) that is different from the other component(s). In preferred, optional embodiments of the present invention, the PET fiber fabric layer 106 is not melted during the manufacturing process so that the final composite laminated article retains the appearance of the fabric. On the other hand, the PET film 104 shall be melted so that it serves as the binder to hold the PET fiber fabric layer 106 and the PET nonwoven laminated board 102 together. To this end, the meting temperature (Tm) of the PET film 104 shall be lower than the Tm of the PET fiber fabric layer 106. Specifically, for PET fiber fabric layer 106 made of single-component PET fibers, the Tm of the PET fiber is higher than the Tm of the PET film 104. As to PET fiber fabric layers 106 made of multi-component PET fibers, the Tm of the PET component at the outermost segment of the multi-component PET fibers shall be higher than the Tm of the PET film 104, so that the PET fibers of the PET fiber fabric layer 106 would not be melted during the manufacturing process.

In certain embodiments of the present disclosure, the Tm of the PET film 104 is in the range of about 120 to 180°C; preferably, 140 to 160°C. For example, the Tm of the PET film 104 may be about 120, 125, 130, 135, 140, 145, 150, 155, 160, 165, 170, 175, or 180°C. On the other hand, the Tm of the PET fibers (or the outermost segment thereof) of the PET fiber fabric layer 106 is in the range of about 230 to 280°C; preferably, 240 to 270°C. For example, the Tm of the PET fibers (or the outermost segment thereof) of the PET fiber fabric layer 106 may be about 230, 235, 240, 245, 250, 255, 260, 265, 270, 275, or 280°C.

The PET nonwoven laminated board 102 comprises multiple nonwoven PET fabrics that are made by a hot-press process. During said hot-press process, the nonwoven PET fabrics are melted, so that said multiple nonwoven PET fabrics are bound together and densified to form the PET nonwoven laminated board 102 with one or more desired mechanical properties that meet the intended use of the final composite laminated article. According to certain optional embodiments of the present invention, the tensile strength of the PET nonwoven laminated board 102 is at least 32 Mpa; preferably, the tensile strength is at least 40 Mpa. Also, the yield strength of the PET nonwoven laminated board 102 is at least 15 Mpa; preferably the yield strength is at least 20 Mpa, according to some embodiments. Additionally, or alternatively, the flexural strength of the PET nonwoven laminated board 102 according to some embodiments is at least 18 Mpa; preferably, at least 20 Mpa. Still additionally or alternatively, the flexural modulus of the PET nonwoven laminated board 102 is at least 640 Mpa; preferably, at least 650 Mpa.

It should be noted that, once the PET nonwoven laminated board 102is formed, it shall not be melted in the subsequent manufacturing process, so that the PET nonwoven laminated board 102 maintains its original mechanical property (or properties). Accordingly, the Tm of the PET nonwoven laminated board 102 shall be higher than the Tm of the PET film 104. According to some embodiments, the multiple nonwoven PET fabrics used to form the PET nonwoven laminated board 102 may have different melting temperatures, and in these cases, at least the melting temperatures of the uppermost and the lowermost of the multiple nonwoven PET fabrics forming the PET nonwoven laminated board 102 shall be higher than the Tm of the PET film 104 so as to prevent the PET nonwoven laminated board 102 from softening or melting during the subsequent step of melting the PET film 104.

In certain embodiments of the present disclosure, the Tm of the of the PET nonwoven laminated board 102 is about 180 to 250°C; preferably, 200 to 230°C. For example, the Tm of the PET nonwoven laminated board 102 may be about 180, 185, 190, 195, 200, 205, 210, 215, 220, 225, 230, 235, 240, 245, or 250°C.

In some illustrative embodiments, the Tm of the PET nonwoven laminated board 102 is about 230°C, the Tm of the PET film 104 is about 150°C, and the Tm of the PET fibers (or the outermost segment thereof) of the PET fiber fabric layer 106 is about 260°C.

According to optional embodiments of the present disclosure, the melting temperature of the PET film is lower than the melting temperature of the PET at the surface of the PET fiber fabric layer and the melting temperature of the PET nonwoven laminated board. Also, in certain optional embodiments, the melting temperature of the PET film is lower than the melting temperature of the PET of the low-density PET nonwoven fabric layer.

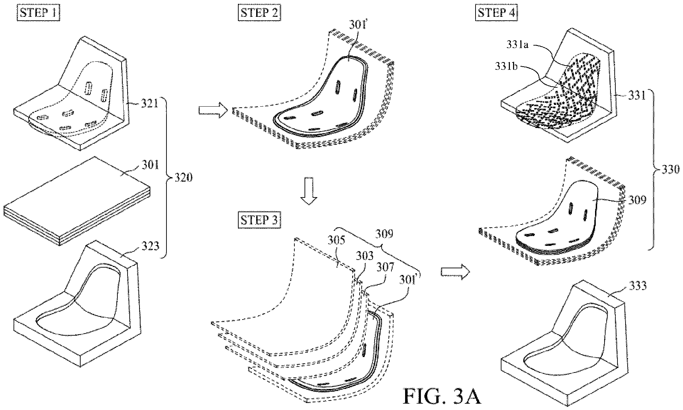

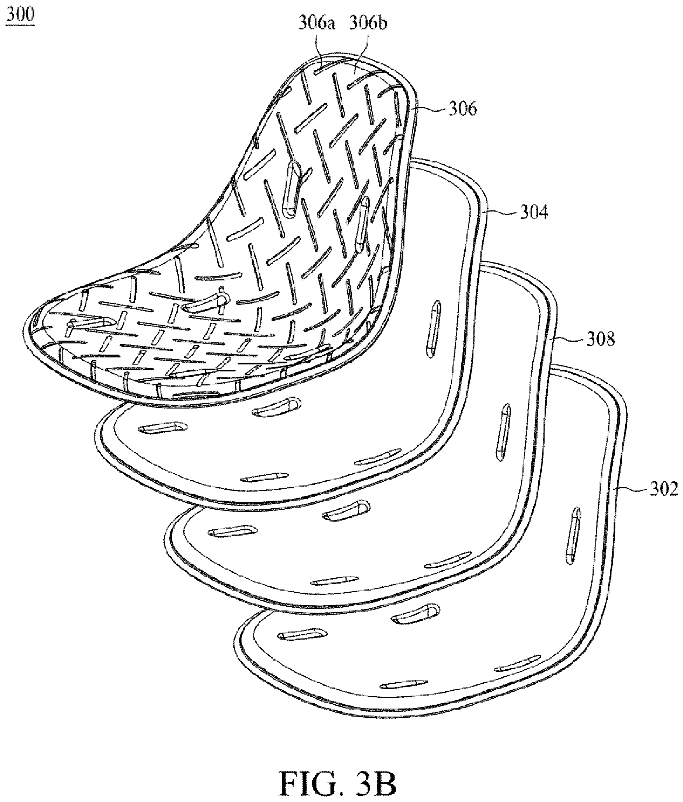

The present composite laminated article may be used in various settings. For example, it could be used as interior decorations that gives the wall, ceiling, or floor a unique look. Alternatively, it may be used as the partitions as part of office cubicles. In some embodiments, the composite laminated article may be a part of a piece of furniture, such as a chair shell, tableboard, cabinet door, or shelf. Figure 3A illustrates an exemplary embodiment regarding the manufacturing process of a chair shell according to the present disclosure, and Figure 3B is an exploded view of the thus-obtained chair shell.

According to certain embodiments of the present invention, the composite laminated article may have one or more extra layers in addition to those illustrated in Figure 1. For example, the schematic diagrams of Figure 2A and Figure 2B respectively illustrate composite laminated articles comprising additional layers, such as the low-density PET nonwoven fabric layer 208, according to various embodiments of the present disclosure. Generally, the low-density PET nonwoven fabric layer 208 comprises a plurality of needle-punched PET fabrics; such needle-punched PET fabrics have a plurality of voids formed by the needle punching, and hence, they exhibited a lower density, as compared with PET fabrics that are not punched. As could be appreciated, these needle-punched PET fabrics serve as a cushion, providing softness to the thus-obtained composite laminated articles. According to various embodiments of the present disclosure, the low-density PET nonwoven fabric layer 208 composed of a plurality of needle-punched PET fabrics may add comfort and support to the composite laminated articles and/or absorb shock or impact. Alternatively, the low-density PET nonwoven fabric layer 208 may comprises multiple layers of one of the following fabrics: spun-lace nonwoven fabrics, thermal-bond nonwoven fabrics, spun-bond nonwoven fabrics, and resin bond non-woven fabrics. As could be appreciated, these nonwoven fabrics also have a plurality of voids formed therein, thereby exhibiting a lower density.

According to various embodiments of the present disclosure, the density of the low-density PET nonwoven fabric layer 208 may be less than 13 kg/m³. For example, the density may be less than 0.5, 1, 1.5, 2, 2.5, 3, 3.5, 4, 4.5, 5, 5.5, 6, 6.5, 7, 7.5, 8, 8.5, 9, 9.5, 10, 10.5, 11, 11.5, 12, 12.5, or 13 kg/m³.

As could be appreciated, the composition and properties of the PET nonwoven laminated board 102, PET film 104, and PET fiber fabric layer 106 discussed above in connection with Figure 1A are also applicable here. Accordingly, detailed descriptions regarding the corresponding parts are omitted herein for the sake of brevity.

Reference is made to Figure 2A, in which the composite laminated article 200A comprises, from top to bottom, a PET fiber fabric layer 206, a PET film 204, a low-density PET nonwoven fabric layer 208, and a PET nonwoven laminated board 202. Alternatively, in the composite laminated article 200B of Figure 2B, the uppermost and the lowermost layers are the same as those in Figure 2A, except the low-density PET nonwoven fabric layer 208 is disposed between the PET fiber fabric layer 206 and the PET film 204. In either case, in order to keep the cushion property of the low-density PET nonwoven fabric layer 208, it is preferable that the low-density PET nonwoven fabric layer 208 is not melted during the step of melting the PET film 204. To this end, the Tm of the low-density PET nonwoven fabric layer 208 shall be higher than the Tm of the PET film 204.

In certain embodiments of the present disclosure, the Tm of the low-density PET nonwoven fabric layer 208 is in the range of about 230 to 280°C; preferably, 240 to 270°C. For example, the Tm of the low-density PET nonwoven fabric layer 208 may be about 230, 235, 240, 245, 250, 255, 260, 265, 270, 275, or 280°C.

In some illustrative embodiments, the Tm of the PET nonwoven laminated board 202 is about 230°C, the Tm of the PET film 204 is about 150°C, the Tm of the PET fibers (or the outermost segment thereof) of the PET fiber fabric layer 206 is about 260°C, and the Tm of the low-density PET nonwoven fabric layer 208 is also about 260°C.

Furthermore, during the step of melting the PET film 204, a portion of the PET component of the PET film 204 is melted, and some of the PET molten will penetrate through the voids of the needle-punched PET, and serve as the binder once it is cooled down to hold the other parts together. Specifically, in the composite laminated article 200A, the PET molten from the melted PET film 204 may reach the PET nonwoven laminated board 202 through the voids on the low-density PET nonwoven fabric layer 208, thereby bonding the PET nonwoven laminated board 202 and the low-density PET nonwoven fabric layer 208 with the PET fiber fabric layer 206 that is disposed on the other side of the PET film 204. As another example, in the composite laminated article 200B, the PET molten from the melted PET film 204 may reach the PET fiber fabric layer 206 through the voids on the low-density PET nonwoven fabric layer 208, thereby bonding the PET fiber fabric layer 206 and the low-density PET nonwoven fabric layer 208 with the PET nonwoven laminated board 202 that is disposed on the other side of the PET film 204.

Figure 3A is a schematic diagram illustrating the process for manufacturing a composite laminated chair shell according to one embodiment of the present disclosure, and Figure 3B is a schematic exploded view of the composite laminated chair shell manufactured by the process of Figure 3A.

Reference is first made to Figure 3A. In Step 1, a stack of plurality of nonwoven PET fabrics 301 (hereinafter, the stack 301) is subjected to a first heat-press process, which uses a shaping mold 320 comprising a male shaping die (or a core plate) 321 and a female shaping die (or a cavity plate) 323. As could be appreciated, the embodiment as illustrated in Figure 3A is directed to the manufacture of a chair shell, and accordingly, the male shaping die 321 and the female shaping die 323 of the shaping mold 320 are designed to have the shape of a chair shell. However, the present disclosure is not limited thereto; rather, in other embodiments, the shaping mold may have a different shape that corresponds to the intended composite laminated article.

Specifically, the stack 301 is placed between the male shaping die 321 and the female shaping die 323; then the two dies are respectively pressed against the upper and lower surfaces of the stack 301 and exert suitable heat and pressure on the stack 301 for a sufficient time. Particularly, the stack 301 is heated at a first temperature that is sufficient to soften or melt the PET component of the nonwoven PET fabrics, so that the multiple nonwoven PET fabrics are bounded together. Also, the stack 301 is densified under the action of a first pressure so that the laminated board thus-obtained exhibits one or more desired mechanical properties.

As could be appreciated, the first temperature used in the Step 1 depends on the melting point (Tm) of the PET component of the nonwoven PET fabrics; that is, the first temperature shall equal to or higher than the Tm of the PET component in the nonwoven PET fabrics so as to soften or melt the nonwoven PET fabrics during the step 1. According to various embodiments of the present disclosure, the first temperature is 180 to 250°C; preferably, 200 to 230°C. For example, the first temperature may be about 180, 185, 190, 195, 200, 205, 210, 215, 220, 225, 230, 235, 240, 245, or 250°C. In some embodiments, the Tm of the nonwoven PET fabrics is about 200°C, whereas the first temperature is about 220°C.

On the other hand, the first pressure used in the Step 1 is chosen to produce intended mechanical property (properties). For example, using the first pressure in the range of about 180 to 250 kgf/cm² may result in a PET nonwoven laminated board with desired tensile strength, flexural strength and/or flexural modulus. In preferred embodiments, the first pressure is in the range of 190 to 250 kgf/cm². Exemplary first pressure includes, about 180, 185, 190, 195, 200, 205, 210, 215, 220, 225, 230, 235, 240, 245, or 250 kgf/cm². In some embodiments, the first pressure is about 200 kgf/cm².

After the heat-press step, the present method proceeds to the Step 2, in which the stack 301 of the hot-pressed nonwoven PET fabrics from the Step 1 is cooled down. In this way, the hot-pressed stack 301 is allowed to take the shape defined by the shaping mold 301, thereby forming a PET nonwoven laminated board 301' that has the shape corresponding to the shaping mold 301. As could be appreciated, the size of the stack 301 used in the Step 1 may be greater than the size of the final composite laminated articles (in this case, the chair shell 300 in Figure 3B); however, to simplify the drawing, the excess fabric that is not part of the final product is illustrated in Figure 3A with broken lines.

Then, in the Step 3, PET layers respectively having different properties are arranged to form a stack 309. In the embodiment illustrated herein, the stack 309 comprises, from top to bottom, a PET fiber fabric layer 305, a PET film 303, a low-density PET nonwoven fabric layer 307, and the PET nonwoven laminated board 301' formed in the Step 2. As could be appreciated, the stack 309 is provided as an example, and in some embodiments, the low-density PET nonwoven fabric layer 307 may be omitted, while in some other embodiments, the low-density PET nonwoven fabric layer 307 may be disposed between the PET fiber fabric layer 305 and the PET film 303. Further, in some optional embodiments, the stack may comprise other PET layers with desired properties.

Next, in the Step 4, the stack 309 is subjected to a second heat-press process that uses a laminating mold 330. Specifically, the stack 309 is placed between the male laminating die 331 and the female laminating die 333 of the laminating mold 330; then the two dies are respectively pressed against the upper and lower surfaces of the stack 309 and exert suitable heat and pressure on the stack 309 for a sufficient time.

According to principles of the present disclosure, the second temperature is selected so that only the PET film 303 would be melted during the Step 4, while the remaining component layers (e.g., 305, 307, 301') are not substantially melted. To this end, the second temperature is higher than the melting temperature of the PET film 303 and is lower than the melting temperature of the PET at the surface of the PET fiber fabric layer 305, the melting temperature of the low-density PET nonwoven fabric layer 307, and the melting temperature of the PET nonwoven laminated board. According to certain optional embodiments, the second temperature is in the range of about 150 to 200°C; preferably, 160 to 180°C. For example, the second temperature may be about 150, 155, 160, 165, 170, 175, 180, 185, 190, 195, or 200°C. In one optional embodiment, the Tm of the PET film is about 150°C, whereas the second temperature is about 180°C.

Moreover, the second pressure is used to facilitate the lamination of these component layers (e.g., 301', 303, 350, and 307). Accordingly, the second pressure is generally lower than the first pressure. In some optional embodiments, the second pressure may be in the range of about 120 to 180 kgf/cm²; preferably, 140 to 160 kgf/cm². For example, the second temperature is about 120, 125, 130, 135, 140, 145, 150, 155, 160, 165, 170, 175, or 180 kgf/cm². In some embodiments, the second pressure is about 150 kgf/cm².

As illustrated, the male laminating die 331 is designed to have a specific portion, so that it only contacts a portion of the upper surface of the stack 309. Specifically, a plurality of protrusions 331a are formed on the male laminating die 331. During the second heat-press process, these protrusions 331a contact the upper surface of the stack 309, and hence, only the portions the PET film 303 that correspond or in adjacent to the protrusions 331a would be melted under the action of the heating. In contrast, the flat face 331b of the male laminating die 331 is not in contact with the stack 309, and hence, during the Step 4, it does not deliver the heat and press to the stack 309. As could be appreciated, the potions that are melted and then hardened upon cooling would give a relatively rigid feature, whereas the remaining portions that are not affected by the heat-press process may retain the appearance of the fabric due to the uppermost PET fiber fabric layer 305 and the softness of the low-density PET nonwoven fabric layer 307.

One of the advantage of the manufacturing process depicted in Figure 3A is that the proposed method, unlike conventional methods, does not use any thermoset binders, such as synthetic resins or natural rubbers. Therefore, the thus-obtained composite laminated article is made of 100 percent PET components, which, upon the expiry of its useful life, may be recycled directly.

After the Step 4, the excess fabrics may be removed. For example, the excess fabrics may be removed by laser cutting (such as 5-axis laser cutting), computer numeral control (CNC) cutting, water jet cutting, or die cutting. As could be appreciated, these excess fabrics are all made from PET components, and hence, they may be subjected to the recycling process directly without any pre-treatment.

Referring to both Figure 3A and Figure 3B. The chair shell 300 according to this embodiment comprises, from top to bottom, a PET fiber fabric layer 306 (formed and cut from the PET fiber fabric layer 305), a PET film 304 (formed and cut from the PET film 304), a low-density PET nonwoven fabric layer 308 (formed and cut from the PET fabric layer 307), and a PET nonwoven laminated board 302 (formed and cut from the PET nonwoven laminated board 301').

As could be appreciated, during the manufacturing process (in particular the step 4 of Figure 3A), a portion of PET film 304 is melted, and the PET molten penetrate through the voids on the low-density PET nonwoven fabric layer 308, whereby binding these component layers together. However, for the sake of simplicity, the PET film 304 in Figure 3B is depicted as an intact film. On the other hand, the PET fiber fabric layer 306 is illustrated to shown the pattern resulted from the second heat-press process. Specifically, the recesses 306a on the PET fiber fabric layer 306 correspond to the portions that is pressed and heated by the protrusions 331a of the male laminating die 331, whereas the remaining portions 306b correspond to the portions that are not contacted by the protrusions 331a. In this way, the portions 306b of outer surface of the PET fiber fabric layer 306 retain the original textile feel of the PET fiber fabric layer 306. Also, the portions of the low-density PET nonwoven fabric layer 308 corresponding to the portions 306b also maintain the softness of the needle-punched PET fabrics.

The following Examples are provided to elucidate certain aspects of the present invention and to aid those of skilled in the art in practicing this invention. These Examples are in no way to be considered to limit the scope of the invention in any manner. Without further elaboration, it is believed that one skilled in the art can, based on the description herein, utilize the present invention to its fullest extent.

### Example 1

### Manufacturing of Chair Shell

In this example, a chair shell was manufactured according to the method of the present disclosure.

Nonwoven PET fabrics were made by needle-punch (density: 100 kg/m³, thickness: 2 mm). The PET fiber fabric was made by knitting. The low-density PET nonwoven fabric was made by melt-blown (density: 6.5 kg/m³, thickness: 20 mm). The PET film was made by rolling (Tm: 150°C, thickness: 0.03 mm).

Twenty-five layers of nonwoven PET fabrics (size: 90 cm * 80 cm) were stacked and then subjected to heat-pressing at 200°C and 50 kgf/cm² for 6 minutes. The heat-pressed stack was cooled down with a shaping mold having the shape of a chair shell under the pressure of 200 kgf/cm² for 5 minutes. The heat-pressed stack of PET nonwoven laminated board was allowed to cool down so that the molten PET takes the shape defined by the mold. Then, a stack was formed by stacking, from top to bottom, a PET fiber fabric (size: 90 cm * 80 cm), 2 layers of PET film (size: 90 cm * 80 cm), a low-density PET nonwoven fabric (size: 90 cm * 80 cm), and the PET nonwoven laminated board. Next, the stack was subjected to heat-pressing at 180°C and 150 kgf/cm² for 5 minutes by use of a laminating mold. After demolding, the excess fabrics were removed by 5-axis computer numeral control (CNC) cutting.

The mechanical properties of the PET nonwoven laminated board are as follows: a tensile strength of at least 32MPa, a yield strength of at least 15MPa, a flexural strength of at least 18MPa, and a flexural modulus of at least 640MPa.

Generally, the above-mentioned mechanical properties are sufficient to bear the weight of an adult of approximately 100 kilograms or more. Accordingly, the present composite laminated article is suitable for use as a chair shell.

## Claims

1. A composite laminated article (100), comprising,
a polyethylene terephthalate (PET) fiber fabric layer (106), a PET nonwoven laminated board (102), and a PET film (104) interposed between the PET fiber fabric layer (106) and the PET nonwoven laminated board (102), wherein at least a portion of the PET film (104) is melted during a manufacturing process thereby holding the PET fiber fabric layer (106) and the PET nonwoven laminated board (102) together.

2. The composite laminated article of claim 1, further comprising a low-density PET nonwoven fabric layer interposed between the PET film and the PET nonwoven laminated board or between PET fiber fabric layer and the PET film, wherein the low-density PET nonwoven fabric layer comprises a plurality of needle-punched PET fabrics.

3. The composite laminated article of claim 2, wherein the low-density PET nonwoven fabric layer has a density less than 13 kg/m³.

4. The composite laminated article of claim 3, wherein the density of the low-density PET nonwoven fabric layer is less than 6.5 kg/m³.

5. The composite laminated article of claim 1, wherein the tensile strength of the PET nonwoven laminated board is at least 32 MPa and/ or wherein the yield strength of the PET nonwoven laminated board is at least 15 MPa.

6. The composite laminated article of claim 1, wherein the flexural strength of the PET nonwoven laminated board is at least 18 MPa and/ or wherein the flexural modulus of the PET nonwoven laminated board is at least 640 MPa.

7. The composite laminated article of claim 1, wherein the composite laminated article is free of any thermoset binder.

8. The composite laminated article of claim 1, wherein the melting temperature of the PET film is lower than the melting temperature of the PET at the surface of the PET fiber fabric layer and the melting temperature of the PET nonwoven laminated board.

9. The composite laminated article of claim 2, wherein the melting temperature of the PET film is lower than the melting temperature of the PET of the low-density PET nonwoven fabric layer.

10. The composite laminated article of claim 1 or claim 2, wherein the composite laminated article is a chair shell.

11. The composite laminated article of claim 2, wherein the PET fiber fabric layer, the PET film, the low-density PET nonwoven fabric layer, and the PET nonwoven laminated board are made from recycled PET.

12. A method for forming a composite laminated article, comprising the steps of,
(a) pressing and heating a plurality of nonwoven PET fabrics with a shaping mold using a first pressure and a first temperature that is higher than the melting temperature of the nonwoven PET fabrics;
(b) allowing the hot-pressed nonwoven PET fabrics from the step (a) to cool down, thereby obtaining a PET nonwoven laminated board with a shape corresponding to the shaping mold;
(c) forming a stack comprising a polyethylene terephthalate (PET) fiber fabric layer, a PET film, and the PET nonwoven laminated board from the step (b), wherein the PET film is interposed between the PET fiber fabric layer and the PET nonwoven laminated board, wherein the melting temperature of the PET film is lower than the melting temperature of the PET at the surface of the PET fiber fabric layer or the melting temperature of the PET nonwoven laminated board; and
(d) pressing and heating the stack from the step (c) with a laminating mold using a second pressure and a second temperature, wherein the second pressure is lower than the first pressure, the second temperature is higher than the melting temperature of the PET film and is lower than the melting temperature of the PET at the surface of the PET fiber fabric layer and the melting temperature of the PET nonwoven laminated board, and the laminating mold contacts at least a portion of the stack, thereby forming the composite laminated article.

13. The method of claim 12, wherein in the step (c), the stack further comprises a low-density PET nonwoven fabric layer interposed between the PET film and the PET nonwoven laminated board or between the PET fiber fabric layer and the PET film, wherein the low-density PET nonwoven fabric layer comprises a plurality of needle-punched PET fabrics; and in the step (d), the second temperature is lower than the melting temperature of the PET of the low-density PET nonwoven fabric layer.

14. The method of claim 12, further comprising the step of,
(e) cutting the excess fabric from the composite laminated article by at least one of the group comprising laser cutting, 5-axis laser cutting, computer numeral control (CNC) cutting, water jet cutting, and die cutting.

15. The method of claim 12, wherein in the step (a), the first temperature is 180 to 250°C, and the first pressure is 180 to 250 kgf/cm² and/ or wherein in the step (d), the second temperature is 150 to 200°C, and the second pressure is 120 to 180 kgf/cm².
